(19) **Europäisches Patentamt / European Patent Office / Office européen des brevets**

(11) **EP 3 572 295 B1**

(12) **FASCICULE DE BREVET EUROPEEN**

(45) Date de publication et mention
de la délivrance du brevet:
**06.09.2023 Bulletin 2023/36**

(21) Numéro de dépôt: **19174582.7**

(22) Date de dépôt: **15.05.2019**

(51) Classification Internationale des Brevets (IPC):
**B61L 3/00** *(2006.01)*     **B61L 27/00** *(2022.01)*

(52) Classification Coopérative des Brevets (CPC):
**B61L 3/006; B61L 27/16;** B60L 2200/26;
B60L 2240/80

(54) **PROCÉDÉ ET SYSTÈME DE RÉGULATION DE LA PUISSANCE ÉLECTRIQUE INSTANTANÉE TOTALE CONSOMMÉE PAR UNE FLOTTE DE VÉHICULES FERROVIAIRES**

VERFAHREN UND SYSTEM ZUR REGULIERUNG DER MOMENTANEN ELEKTRISCHEN GESAMTLEISTUNG, DIE VON EINER SCHIENENFAHRZEUGFLOTTE VERBRAUCHT WIRD

METHOD AND SYSTEM FOR CONTROLLING THE TOTAL INSTANT ELECTRICAL POWER CONSUMED BY A FLEET OF RAILWAY VEHICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2018 FR 1854064**

(43) Date de publication de la demande:
**27.11.2019 Bulletin 2019/48**

(73) Titulaire: **SNCF Voyageurs
93200 Saint-Denis (FR)**

(72) Inventeurs:
• **LETROUVE, Tony
59113 SECLIN (FR)**
• **GAZAIGNES, Guillaume
92370 CHAVILLE (FR)**

(74) Mandataire: **IPAZ
Bâtiment Platon
Parc Les Algorithmes
91190 Saint-Aubin (FR)**

(56) Documents cités:
**EP-A1- 2 708 438     EP-A1- 3 037 317
EP-A1- 3 150 419**

## Description

La présente invention concerne un procédé de modulation de la puissance électrique instantanée totale consommée par une flotte de véhicules ferroviaires. Elle concerne également un système mettant en oeuvre un tel système.

Le domaine de l'invention est le domaine ferroviaire, et plus particulièrement, le domaine de la gestion de l'énergie électrique consommée par les véhicules ferroviaires.

## État de la technique

Un véhicule ferroviaire électrique, de type train ou tramway, est alimenté en électricité grâce à une caténaire, un rail ou encore par un dispositif inductif, prévu à cet effet le long de la voie ferrée. Dans tous les cas, l'électricité est fournie par un réseau électrique.

La puissance électrique totale consommée, en un instant donné, par une flotte de véhicules électriques circulant au sein d'un réseau ferroviaire peut présenter des variations importantes. Or, les équipements d'alimentation électrique se trouvant en amont du réseau ferroviaire, mais aussi ceux se trouvant au sein du réseau ferroviaire, ne sont pas dimensionnés pour fonctionner efficacement lors de ces variations. Une trop faible puissance peut engendrer des pertes importantes, alors qu'une trop forte puissance peut provoquer une détérioration de ces équipements. De plus, ces variations peuvent mettre en difficulté le réseau électrique, et par voie de conséquence, les installations tierces alimentées par ce réseau : certaines installations tierces peuvent même se trouver en défaut d'alimentation.

On connait du document EP 2 708 438 A1 une solution d'aide à la conduite d'un véhicule ferroviaire permettant de diminuer la consommation et l'usure du véhicule. Cette solution comprend une indication, par exemple à un conducteur du véhicule, en fonction de la localisation du véhicule ferroviaire, de consignes de conduites préalablement déterminées lors d'une phase d'acquisition. On connait également du document EP 3 150 419 A1 une solution de diminution de l'énergie consommée par un système ferroviaire en coupant l'alimentation électrique fournie à un véhicule ferroviaire par une sous-station, lors d'une phase de freinage dudit véhicule ferroviaire.

Or, il n'existe actuellement aucun procédé ou système permettant de réguler la puissance électrique instantanée totale consommée par une flotte de véhicules ferroviaires.

Un but de la présente invention est de remédier à au moins un de ces inconvénients.

Un autre but de l'invention est de proposer un procédé et un système de régulation de la puissance électrique instantanée totale consommée par une flotte de véhicules ferroviaires.

Un autre but de l'invention est de proposer un procédé et un système de régulation pour diminuer, ou limiter, les variations de la puissance électrique instantanée totale consommée par une flotte de véhicules ferroviaires électriques.

Un autre but de l'invention est de proposer un procédé et un système permettant de mieux protéger les équipements d'alimentation électrique se trouvant en amont, ou au sein, d'un réseau ferroviaire.

## Exposé de l'invention

L'invention propose d'atteindre au moins un de ces objectifs par un procédé de régulation de la puissance électrique instantanée totale consommée par une flotte de véhicules ferroviaires, comprenant au moins une itération d'une phase, dite de modulation de puissance, comprenant les étapes suivantes :

- pour chaque véhicule de ladite flotte :

  - détermination, au sein dudit véhicule, d'une puissance électrique instantanée consommée par ledit véhicule, et
  - détermination d'une puissance électrique, dite disponible, en fonction de ladite puissance instantanée et de la position dudit véhicule sur son trajet ;
  - sélection d'au moins un véhicule, dit cible, en fonction desdites puissance disponibles et d'au moins une valeur seuil de puissance électrique instantanée totale prédéterminée pour ladite flotte ; et
  - transmission d'au moins une consigne de conduite audit au moins un véhicule cible modifiant la puissance instantanée consommée par ledit au moins un véhicule cible.

Ainsi, le procédé selon l'invention permet de réaliser une régulation de la puissance électrique instantanée totale consommée par une flotte de véhicules ferroviaires en fonction des puissances instantanées de chaque véhicule ferroviaire.

En particulier, l'invention permet de réguler à la baisse, comme à la hausse, la puissance instantanée disponible au sein d'un ou plusieurs véhicules cibles, relativement à une valeur seuil de puissance instantanée totale pour l'ensemble des véhicules.

Par exemple, lorsque la valeur seuil est une valeur maximale de puissance instantanée totale consommée, le procédé selon l'invention permet de diminuer la puissance instantanée d'un ou plusieurs véhicules cibles au sein de la flotte pour ne pas dépasser ladite valeur seuil maximale. Cela permet de protéger les équipements d'alimentation d'une surcharge, et d'éviter de mettre en défaut le réseau électrique général pour des équipements tiers.

A l'inverse, lorsque la valeur seuil est une valeur minimale de puissance instantanée totale consommée, le procédé selon l'invention permet d'augmenter la puissance instantanée d'un ou plusieurs véhicules pour ne pas descendre en dessous de ladite valeur seuil minimale. Cela permet d'éviter d'utiliser les équipements d'alimentation en sous-charge et de provoquer des pertes.

De plus, les valeurs seuil minimale et maximale peuvent être fixées pour réduire la plage de variation de la puissance instantanée totale consommée.

Avantageusement, le procédé selon l'invention peut en outre comprendre, pour chaque véhicule, une détermination d'un paramètre, dit de complexité, relatif à une modulation de la puissance instantanée consommée dans ledit véhicule.

Dans ce cas, la sélection d'au moins un véhicule cible peut en outre être réalisée en fonction dudit paramètre de complexité.

En particulier, lorsque le procédé identifie plusieurs véhicules candidats dans lesquels il est possible de réaliser une modulation de la puissance instantanée consommée, les véhicules cibles sélectionnés peuvent être ceux pour lesquels le paramètre de complexité indique une plus grande simplicité.

La valeur du paramètre de complexité de chaque véhicule peut être fonction de la nature du véhicule : taille, poids, fonction.

Alternativement ou en plus, la valeur du paramètre de complexité de chaque véhicule peut être fonction des conditions climatiques (pluie, neige, etc.).

Alternativement ou en plus, la valeur du paramètre de complexité de chaque véhicule peut être fonction du trajet parcouru par le véhicule.

Alternativement ou en plus, la valeur du paramètre de complexité de chaque véhicule peut être fonction des conditions de circulation sur la voie ferrée concernée par le trajet.

La valeur du paramètre de complexité de chaque véhicule peut être prédéterminée, par exemple manuellement et de manière empirique, pour chaque véhicule et mémorisée dans une base de données consultée au moment adéquat, par exemple lors de l'étape de sélection.

Avantageusement, le procédé selon l'invention peut comprendre, préalablement à la phase de modulation de puissance, une détermination, pour au moins un véhicule parcourant un trajet :

- d'un premier profil de puissance permettant de parcourir ledit trajet le plus rapidement ;
- d'un deuxième profil de puissance permettant de parcourir ledit trajet avec un retard, dit retard maximal, par rapport au premier profil de puissance. En particulier ce deuxième profil de puissant peut permettre de parcourir ledit trajet dans des conditions, dites conditions normales, c'est-à-dire dans des conditions prédéterminées et optimisées à la fois en fonction du temps de parcours et de l'énergie consommée désirés, l'écart de temps de parcours en fin de trajet selon le deuxième profil de puissance par rapport au temps de parcours selon le premier profil de puissance correspondant au retard maximal ;

l'étape de détermination d'une puissance disponible pour ledit véhicule comprenant les opérations suivantes :

- détermination d'un écart de temps de parcours actuel selon le deuxième profil de puissance par rapport au temps de parcours selon le premier profil de puissance, dit retard actuel, en fonction de la position actuelle dudit véhicule sur ledit trajet ; et
- calcul de la puissance disponible en fonction dudit retard actuel, dudit retard maximal et des premier et deuxième profils de puissance.

En particulier, la puissance disponible peut être déterminée en fonction de la différence entre le retard maximal et le retard actuel. Cette différence correspond au retard que le véhicule ferroviaire peut encore se permettre sur le trajet qu'il parcourt.

Le véhicule peut par exemple être ralenti pour diminuer la puissance instantanée consommée par ledit véhicule.

Le véhicule peut également être mis en mode de freinage régénératif de sorte que la puissance instantanée consommée devient négative, c'est-à-dire que le véhicule produit de l'énergie.

La consigne de conduite peut être réalisée pendant une durée maximale correspondant à ladite différence de retard.

Si le retard maximal est atteint, alors il n'y a plus de disponibilité de puissance instantanée au niveau de ce véhicule.

Suivant un mode de réalisation particulier, au moins un profil de puissance d'un véhicule pour un trajet peut être déterminé par mesure, lors d'une étape préliminaire, en faisant circuler ledit véhicule sur ledit trajet.

Alternativement, au moins un profil de puissance d'un véhicule pour un trajet peut être déterminé par calcul en fonction d'au moins une caractéristique dudit véhicule et d'au moins une caractéristique dudit trajet. En effet, connaissant les caractéristiques de consommation du véhicule et les caractéristiques du trajet (distance totale, dénivelés, limitations de vitesse), il est possible de déterminer les premiers et deuxième profils de puissance.

Par ailleurs, l'étape de détermination d'une puissance instantanée peut comprendre :

- une lecture d'une valeur de puissance consommée, à un instant donné, fournie par un organe embarqué dans ledit véhicule ; ou
- un calcul de ladite puissance en fonction d'une tension et d'un courant consommés par ledit véhicule, audit instant. La tension et le courant peuvent être mesurés au sein du véhicule par des organes prévus à cet effet.

Comme précisé plus haut, au moins une consigne de conduite peut être une consigne de diminution de vitesse du véhicule cible.

La diminution de la vitesse peut être réalisée par un freinage, en particulier un freinage génératif, par une diminution d'accélération, ou encore par un arrêt d'accélération mettant le véhicule dans un mode de conduite sur l'erre.

Pour au moins un véhicule cible, la consigne de conduite peut être appliquée de manière automatisée.

Dans ce cas, la consigne de conduite peut par exemple être émise vers un calculateur du véhicule, ou vers un organe concerné par la consigne de conduite tel qu'un système de freinage, par exemple.

Alternativement, pour au moins un véhicule cible, la consigne de conduite peut être signalée à un conducteur dudit véhicule cible, par exemple au travers d'une interface homme machine installée au sein dudit véhicule, et déclenchée par ledit conducteur.

La sélection d'un véhicule cible, et la détermination d'une consigne de conduite pour ledit véhicule cible, peuvent être réalisées au niveau d'un site central, distant des véhicules ferroviaires.

Dans ce cas, chaque véhicule est en communication avec ledit site distant, par exemple au travers d'un réseau de communication sans fil, en particulier de type 3G, 4G, ou similaire.

Dans ce mode de réalisation particulier, chaque véhicule communique au site central :

-   soit la puissance électrique instantanée consommée et sa position, de sorte que le site central peut déterminer la puissance disponible ; ou
-   soit directement la puissance disponible, cette dernière étant alors déterminée au niveau dudit véhicule.

Pour au moins un véhicule cible, une consigne de conduite peut être appliquée :

-   pendant une durée calculée en fonction de la différence de retard restant ;
-   pendant une durée prédéterminée, ou encore
-   jusqu'à la prochaine itération de la phase de modulation de puissance.

La phase de modulation de puissance peut être réalisée à une fréquence prédéterminée, par exemple toutes les 5 minutes.

Suivant un autre aspect de la même invention, il est proposé un système de régulation de la puissance électrique instantanée totale consommée par une flotte de véhicules ferroviaires, configuré pour mettre en oeuvre toutes les étapes du procédé selon l'invention, ledit système comprenant :

-   un boitier installé au sein de chaque véhicule et configuré pour :

    -   déterminer une puissance instantanée consommée par ledit véhicule ;
    -   déterminer une puissance, dite disponible, en fonction de ladite puissance instantanée et de la position dudit véhicule sur son trajet ;

-   un serveur configuré pour :

    -   sélectionner au moins un véhicule, dit cible, en fonction desdites puissance disponibles ;
    -   transmettre au moins une consigne de conduite audit au moins un véhicule cible modifiant la puissance instantanée dudit véhicule cible.

En particulier, le système peut comprendre en matière de moyens toutes les caractéristiques décrites en référence au procédé selon l'invention, ou qui peuvent être déduites directement et sans ambigüité de la description du procédé selon l'invention par un homme du métier.

De plus, le boîtier d'au moins un véhicule peut comprendre une combinaison quelconque d'au moins un des moyens suivants :

-   une interface de communication sans fil avec le serveur central ;
-   une interface de communication filaire, ou sans fil, avec au moins un organe dudit véhicule ;
-   un module de géolocalisation dudit véhicule,
-   un accéléromètre, etc.

Au moins une consigne de conduite peut être transmise à un organe du véhicule par l'intermédiaire dudit boîtier, ou sans passer par ledit boîtier.

**Description des figures et modes de réalisation**

D'autres avantages et caractéristiques apparaîtront à l'examen de la description détaillée d'un mode de réalisation nullement limitatif, et des dessins annexés sur lesquels

-   la FIGURE 1 est une représentation schématique d'un exemple de de réalisation non limitatif d'un procédé selon l'invention ;
-   la FIGURE 2 est une représentation schématique d'un exemple non limitatif de détermination d'une puissance instantanée disponible au sein d'un véhicule ;
-   la FIGURE 3 est une représentation schématique d'un exemple de réalisation non limitatif d'un boîtier pouvant être utilisé, au niveau de chaque véhicule, pour la mise en oeuvre du procédé selon l'invention ; et
-   la FIGURE 4 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

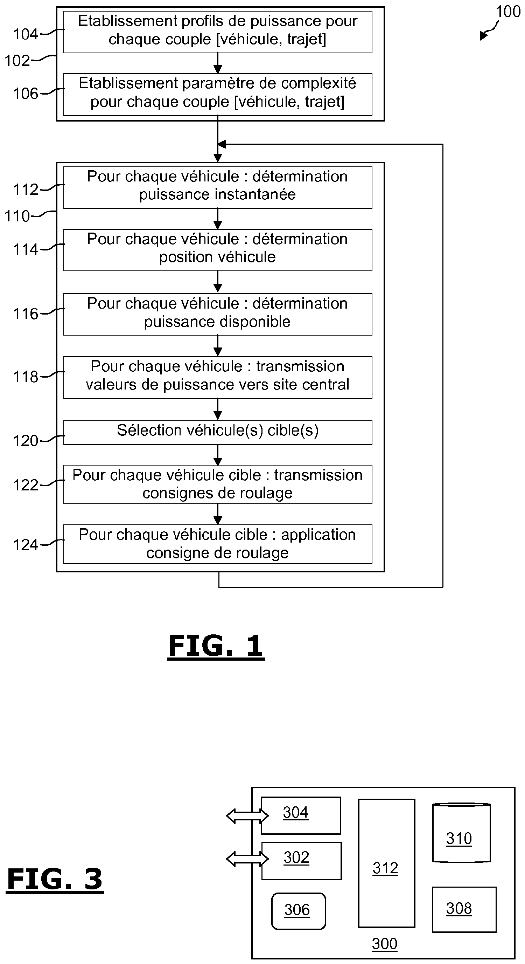

La FIGURE 1 est une représentation schématique d'un exemple de réalisation non limitatif d'un procédé selon l'invention.

Le procédé 100 de la FIGURE 1 comprend une phase préliminaire 102.

Cette phase préliminaire 102 comprend une étape 104 lors de laquelle un premier et un deuxième profils de puissance sont établis pour chaque véhicule ferroviaire parcourant un trajet.

Le premier profil de puissance décrit la puissance instantanée consommée par le véhicule en fonction du temps, tout au long du trajet, s'il parcourt le trajet le plus rapidement possible. Le deuxième profil de puissance décrit la puissance instantanée consommée par le véhicule, tout au long du trajet, s'il parcourt le trajet dans les conditions normales.

Chaque profil de puissance peut être établi par mesure expérimentale, en faisant parcourir le véhicule sur le trajet concerné.

Alternativement, chaque profil de puissance peut être déterminé par calcul en en fonction :

- des caractéristiques du véhicule : puissance, longueur, vitesse maximale, etc.
- des caractéristiques du trajet : distance à parcourir, pentes, descentes, limitations de vitesse, etc.

Les premier et deuxième profils de puissance sont mémorisés pour chaque couple [véhicule ; trajet], par exemple dans une base de données se trouvant sur un site centrale, ou dans un boîtier au sein de chaque véhicule.

La phase préliminaire 102 comprend en outre une étape 106 lors de laquelle un paramètre de complexité est déterminé pour chaque couple [véhicule ; trajet], et mémorisé au niveau d'une base de données se trouvant sur un site centrale, ou dans un boîtier équipant chaque véhicule. Ce paramètre de complexité indique, pour chaque véhicule parcourant un trajet, la complexité de modification de la puissance instantanée consommée par ce véhicule lorsqu'il parcourt ce trajet. Le paramètre de complexité peut être fonction :

- de caractéristiques du véhicule : puissance, longueur, vitesse maximale, etc.
- de caractéristiques du trajet : distance à parcourir, pentes, descentes, limitations de vitesse, etc.
- de conditions météo lors de la réalisation du trajet.

Par exemple, la modification de la puissance instantanée sera plus complexe dans un train long parcourant un trajet en pente en cas de pluie ou de neige. A l'inverse, la modification de la puissance instantanée sera plus simple dans un train court parcourant un trajet plat en cas de beau temps.

La ou les valeurs du paramètre de complexité sont mémorisées pour chaque couple [véhicule ; trajet], par exemple dans une base de données se trouvant sur un site centrale, ou au sein de chaque véhicule.

Le procédé 100 comprend en outre au moins une itération d'une phase 110 de modulation de la puissance instantanée totale consommée par une flotte de véhicules ferroviaires.

La phase 100 de modulation de puissance peut être déclenchée sur demande, ou à une fréquence donnée.

Chaque itération de la phase de modulation 110 peut être réalisée pour s'assurer de maintenir la puissance instantanée totale consommée par l'ensemble des véhicules de la flotte :

- inférieure ou égale à une valeur seuil maximale ; et/ou
- supérieure ou égale à une valeur seuil minimale.

La phase de modulation 110 comprend une étape 112 déterminant la puissance instantanée consommée au niveau de chaque véhicule. La valeur de la puissance instantanée consommée au niveau d'un véhicule peut être :

- positive : dans ce cas le véhicule consomme de l'énergie ;
- négative : dans ce cas le véhicule produit de l'énergie, par exemple grâce à un dispositif de freinage régénératif.

Pour chaque véhicule, la valeur de la puissance instantanée consommée peut être fournie par un organe du véhicule. Alternativement, la valeur de la puissance instantanée peut être déterminée par un boîtier installé dans le véhicule, à cet effet.

Lors d'une étape 116, la puissance instantanée disponible au sein de chaque véhicule est déterminée en fonction :

- de la puissance instantanée ;

- de la position du véhicule, et
- des premier et deuxième profils de puissance déterminés lors de l'étape 104.

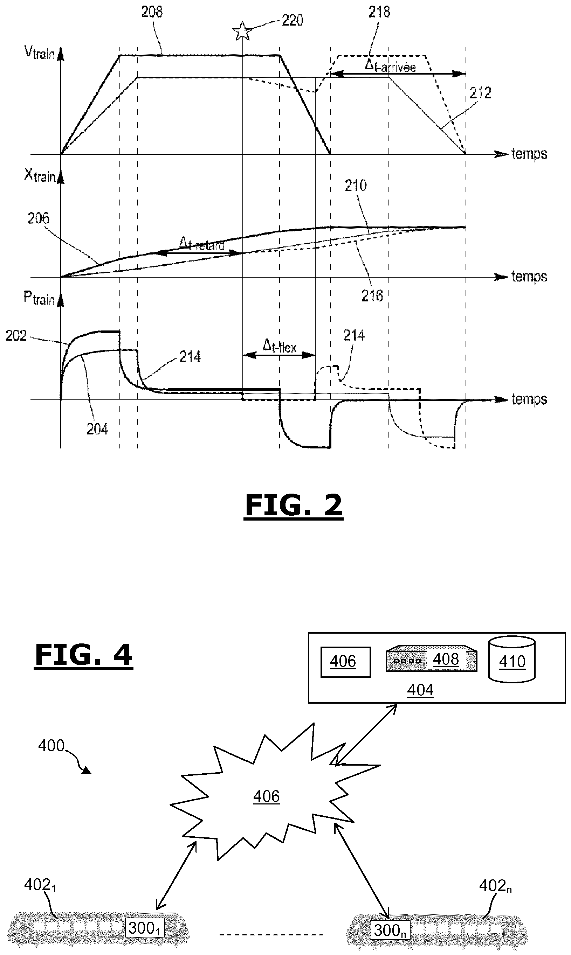

Un exemple de détermination de la puissance disponible au sein d'un véhicule est donné plus loin, en référence à la FIGURE 2.

Lors d'une étape 118, chaque véhicule transmet vers un site distant :

- la valeur de la puissance instantanée consommée au niveau dudit véhicule ; et
- la valeur de la puissance instantanée disponible au niveau dudit véhicule.

Le site central réalise une sommation des puissances instantanées reçues et détermine la puissance instantanée totale consommée par l'ensemble des véhicules de la flotte.

Si la valeur de la puissance instantanée est inférieure à une valeur seuil maximale aucune action n'est entreprise.

Dans le cas contraire, lors d'une étape 120le site central sélectionne une ou plusieurs véhicules cibles, dans la flotte de véhicules, en fonction :

- de la puissance instantanée disponible pour chaque véhicule, et
- du paramètre de complexité déterminé lors de l'étape 106.

Pour chaque véhicule cible sélectionné, lors d'une étape 122, une consigne de conduite est transmis audit véhicule cible pour diminuer la puissance instantanée consommée par ledit véhicule.

Dans le cas où on souhaite diminuer la valeur de la puissance instantanée, la consigne de conduite peut être :

- une diminution d'accélération,
- un arrêt d'accélération,
- un freinage, et/ou
- un freinage régénératif.

Dans le cas où on souhaite augmenter la valeur de la puissance instantanée, la consigne de conduite peut être une accélération.

Le nombre de véhicules cibles et la consigne de conduite pour chaque véhicule cible sont déterminés pour diminuer la puissance instantanée totale consommée en dessous de la valeur seuil maximale, ou pour augmenter la puissance instantanée totale consommée au-dessus de la valeur seuil minimale.

Lors d'une étape 124, chaque consigne de conduite est appliquée au sein de chaque véhicule cible, soit de manière automatisée, soit de manière manuelle par un conducteur à qui ladite consigne de conduite a été signalée.

La phase de modulation de puissance 110 est alors terminée. Elle peut être réitérée sur demande, ou à une fréquence donnée, par exemple toutes les 5 minutes.

La FIGURE 2 est une représentation schématique d'un exemple non limitatif de détermination d'une puissance instantanée disponible au sein d'un véhicule.

Comme précisé plus haut, la détermination d'une puissance instantanée disponible au sein d'un véhicule sur un trajet est réalisée en fonction de :

- un premier profil de puissance 202 correspondant à la puissance instantanée consommée par le véhicule $P_{train}$, en fonction du temps, pour parcourir le trajet le plus rapidement possible ;
- un deuxième profil de puissance 204 correspondant à la puissance instantanée consommée par le véhicule $P_{train}$, en fonction du temps, pour parcourir le trajet dans les conditions normales.

Pour le premier profil de puissance 202, il est également établi la position du véhicule $X_{train}$ en fonction du temps, donnée par la courbe 206, ainsi que la vitesse du véhicule $V_{train}$ en fonction du temps, donnée par la courbe 208.

De manière similaire, pour le deuxième profil de puissance 204, il est également établi la position du véhicule $X_{train}$ en fonction du temps, donnée par la courbe 210, ainsi que la vitesse du véhicule $V_{train}$ en fonction du temps, donnée par la courbe 212.

Ainsi, on remarque qu'avec le premier profil de puissance, le véhicule termine le trajet bien plus rapidement qu'avec le deuxième profil de puissance. Avec ce dernier, le trajet est parcouru avec un retard noté $\Delta t_{arrivée}$. Ce retard est le retard maximal souhaité sur le trajet.

L'ensemble des courbes 202-212 sont déterminées préalablement à une phase de modulation de puissance et mémorisées au niveau du véhicule.

Sur la FIGURE 2, les courbes 214-218 correspondent au comportement réel du véhicule lorsqu'il parcourt le trajet, respectivement en termes de puissance, de position et de vitesse.

En un instant donné, matérialisé par l'étoile 220, la puissance disponible est calculée de la manière suivante.

La position du véhicule est déterminée pour ledit instant 220, par exemple grâce à une puce GPS.

Pour cette position, un retard, notée $\Delta_{t-retard}$ est calculé par rapport à la position qu'aurait dû avoir le véhicule, s'il avait roulé selon le premier profil de puissance 202. Ce retard $\Delta_{t-retard}$ est calculé grâce aux courbes de position 206 et 210, comme indiqué sur la FIGURE 2.

Le retard calculé $\Delta_{t-retard}$ est comparé au retard maximal $\Delta_{t-arrivée}$. La différence entre le retard maximal et le retard calculé est déterminé comme suit :

$$\Delta_{t\text{-flex}} = (\Delta_{t\text{-arrivée}}) - (\Delta_{t\text{-retard}})$$

La puissance disponible est alors calculée en fonction de cette différence de retard $\Delta_{t\text{-flex}}$, grâce aux courbes de puissances 202 et 204. La puissance disponible correspond à la puissance maximale qui peut être économisée si le véhicule ne consomme pas d'énergie pendant toute la durée $\Delta_{t\text{-flex}}$, à laquelle s'ajoute la puissance maximale qui peut être produite par le véhicule pendant toute la durée $\Delta_{t\text{-flex}}$, le cas échéant.

Dans l'exemple représenté sur la FIGURE 2, le véhicule est commandé pour annuler la puissance consommée pendant toute la durée $\Delta_{t\text{-flex}}$ à partir de l'instant 220, c'est pourquoi la courbe 214 donne une valeur de puissance instantanée nulle pour toute la durée $\Delta_{t\text{-flex}}$ après l'instant 220.

La FIGURE 3 est une représentation schématique d'un exemple de réalisation non limitatif d'un boîtier pouvant être utilisé, au sein d'un véhicule ferroviaire, pour la mise du procédé selon l'invention.

Le boîtier 300, représenté sur la FIGURE 3, peut par exemple utilisé pour la mise en oeuvre du procédé 100 de la FIGURE 1.

Le boîtier 300 comprend une interface de communication sans fil 302 pour communiquer avec un site distant, et en particulier avec un serveur situé sur un site central. L'interface de communication peut utiliser le réseau de communication 3g, 4G, 5G, ou similaire.

Le boîtier 300 comprend une interface de communication filaire 304 pour communiquer avec au moins un organe du véhicule, par exemple pour :

- recevoir une valeur de puissance instantanée consommée au niveau du véhicule ; et/ou
- pour transmettre une consigne de conduite à appliquer au sein du véhicule, et reçu d'un site central.

L'interface de communication filaire 304 peut être adaptée pour réaliser une communication CAN ou Modbus.

Le boîtier 300 comprend en outre un moyen de géolocalisation pour déterminer la position du véhicule, tel que par exemple une puce GPS 306.

Un accéléromètre 308 peut être installé au sein dudit boîtier 300, par exemple pour contrôler le régime de fonctionnement du véhicule.

Un moyen de mémorisation 310 peut être prévu au sein du boîtier 300 pour mémoriser différentes données, telles que par exemple des profils de puissance, des valeurs de paramètre de complexité, des caractéristiques du véhicule, des caractéristiques du trajet, etc.

Le boîtier 300 peut être muni d'un processeur 312 pour coordonner le fonctionnement des différents organes du boîtier 300, et pour réaliser différentes opérations telles que par exemple pour calculer une puissance instantanée disponible au sein du véhicule, par exemple comme décrit plus haut en référence à la FIGURE 2.

La FIGURE 4 est une représentation schématique d'un exemple de réalisation non limitatif d'un système selon l'invention.

Le système 400, représenté sur la FIGURE 4, peut être utilisé pour mettre en oeuvre le procédé 100 de la FIGURE 1.

Le système 400 permet de réaliser une régulation de la puissance instantanée totale consommée par une pluralité de véhicules $402_1\text{-}402_n$.

Chaque véhicule $402_1\text{-}402_n$ comprend un boîtier, respectivement $300_1\text{-}300_n$, embarqué dans ledit véhicule et en communication avec un site central 404 au travers d'un réseau de communication sans fil 406, de type 3G.

Chaque boîtier $300_i$ peut être identique au boîtier 300 de la FIGURE 3. Le site distant 404 comprend :

- un module de communication sans fil 406 avec chaque boîtier $300_i$,
- un serveur 406 configuré pour réaliser les opérations souhaitées, telles que par exemple sélectionner un véhicule cible, déterminer une consigne de conduite pour ledit véhicule cible, etc. ; et
- et éventuellement, une base de données pour mémoriser différents paramètres, tels que par exemple le paramètre de complexité pour chaque couple [véhicule ; trajet].

## Revendications

1. Procédé (100) de régulation de la puissance électrique instantanée totale consommée par une flotte de véhicules ferroviaires ($402_1\text{-}402_n$), **caractérisé en ce qu'**il comprend au moins une itération d'une phase (110), dite de modulation de puissance, comprenant les étapes suivantes :

    - pour chaque véhicule ($402_1\text{-}402_n$) de ladite flotte :

        - détermination (112), au sein dudit véhicule ($402_1\text{-}402_n$), d'une puissance électrique instantanée consommée par ledit véhicule ($402_1\text{-}402_n$),
        - détermination (116) d'une puissance électrique, dite disponible, en fonction de ladite puissance instantanée et de la position dudit véhicule ($402_1\text{-}402_n$) sur son trajet ;

    - sélection (120) d'au moins un véhicule, dit cible, en fonction desdites puissance disponibles et d'au moins une valeur seuil de puissance électrique instantanée totale prédéterminée pour ladite flotte ;
    - transmission (122) d'au moins une consigne de conduite audit au moins un véhicule cible, modifiant la puissance instantanée consommée par ledit véhicule cible.

2. Procédé (100) selon la revendication précédente, **caractérisé en ce qu'**il comprend en outre, pour chaque véhicule ($402_1$-$402_n$), une détermination (106) d'un paramètre, dit de complexité, relatif à une modulation de la puissance instantanée consommée dans ledit véhicule ($402_1$-$402_n$), la sélection d'au moins un véhicule cible étant en outre réalisée en fonction dudit paramètre de complexité.

3. Procédé (100) selon l'une quelconque des revendications précédentes, **caractérisé en ce qu'**il comprend, préalablement à la phase (110) de modulation de puissance, une détermination (104), pour au moins un véhicule ($402_1$-$402_n$) parcourant un trajet :

   - d'un premier profil de puissance permettant de parcourir ledit trajet le plus rapidement ;
   - d'un deuxième profil de puissance permettant de parcourir ledit trajet avec un retard, dit retard maximal, par rapport au premier profil de puissance ;

   l'étape de détermination (116) d'une puissance disponible pour ledit véhicule ($402_1$-$402_n$) comprenant les opérations suivantes :

   - détermination d'un écart de temps de parcours actuel, dit retard actuel, selon le deuxième profil de puissance par rapport au temps de parcours selon le premier profil de puissance, dit retard actuel, en fonction de la position actuelle dudit véhicule ($402_1$-$402_n$) sur ledit trajet ; et
   - calcul de la puissance disponible en fonction dudit retard actuel, dudit retard maximal et des premier et deuxième profils de puissance.

4. Procédé (100) selon la revendication précédente, **caractérisé en ce qu'**au moins un profil de puissance d'un véhicule ($402_1$-$402_n$) pour un trajet est déterminé :

   - par mesure, lors d'une étape préliminaire, en faisant circuler ledit véhicule sur ledit trajet ;
   - par calcul en fonction d'au moins une caractéristique dudit véhicule et d'au moins une caractéristique dudit trajet.

5. Procédé (100) selon l'une quelconque des revendications précédentes, **caractérisé en ce que** l'étape (112) de détermination d'une puissance instantanée comprend :

   - une lecture d'une valeur de puissance consommée, à un instant donné, fournie par un organe embarqué dans ledit véhicule ; ou
   - un calcul de ladite puissance en fonction d'une tension et d'un courant consommés par ledit véhicule, audit instant.

6. Procédé (100) selon l'une quelconque des revendications précédentes, **caractérisé en ce qu'**au moins une consigne de conduite est une consigne de diminution de vitesse du véhicule cible par freinage, par diminution d'accélération, par arrêt d'accélération.

7. Procédé (100) selon l'une quelconque des revendications précédentes, **caractérisé en ce que**, pour au moins un véhicule cible, la consigne de conduite est appliquée de manière automatisée.

8. Procédé (100) selon l'une quelconque des revendications 1 à 6, **caractérisé en ce que**, pour au moins un véhicule cible, la consigne de conduite est signalée à un conducteur dudit véhicule cible et déclenchée par ledit conducteur.

9. Système (400) de régulation de la puissance électrique instantanée totale consommée par une flotte de véhicules ferroviaires ($402_1$-$402_n$), ledit système (400) comprenant :

   - un boîtier (300, $300_1$-$300_n$) installé au sein de chaque véhicule ($402_1$-$402_n$) et configuré pour :

     - déterminer une puissance instantanée consommée par ledit véhicule ($402_1$-$402_n$);
     - déterminer une puissance, dite disponible, en fonction de ladite puissance instantanée et de la position dudit véhicule ($402_1$-$402_n$) sur son trajet ;

   - un serveur (408) configuré pour :

     - sélectionner au moins un véhicule, dit cible, en fonction desdites puissance disponibles ;
     - transmettre au moins une consigne de conduite audit au moins un véhicule cible modifiant la puissance instantanée dudit véhicule cible.

10. Système (400) selon la revendication précédente, **caractérisé en ce que** le boîtier (300, $300_1$-$300_n$) d'au moins un véhicule ($402_1$-$402_n$) comprend une combinaison quelconque d'au moins un des moyens suivants :

    - une interface (302) de communication sans fil avec le serveur central (408) ;
    - une interface de communication filaire (304), ou sans fil, avec au moins un organe dudit véhicule ($402_1$-$402_n$) ;
    - un module (306) de géolocalisation dudit véhicule,
- un accéléromètre.

**Patentansprüche**

1. Verfahren (100) zum Regulieren der gesamten momentanen elektrischen Leistung, die durch eine Schienenfahrzeugflotte ($402_1$-$402_n$) verbraucht wird, **dadurch gekennzeichnet, dass** es mindestens eine Iteration einer Phase (110), genannt Leistungsmodulationsphase, umfasst, umfassend die Schritte:

  - für jedes Fahrzeug ($402_1$-$402_n$) der Flotte:

    - Bestimmen (112), innerhalb des Fahrzeugs ($402_1$-$402_n$), einer momentanen elektrischen Leistung, die durch das Fahrzeug ($402_1$-$402_n$) verbraucht wird,
    - Bestimmen (116) einer elektrischen Leistung, verfügbar genannt, in Abhängigkeit von der momentanen Leistung und der Position des Fahrzeugs ($402_1$-$402_n$) auf seiner Fahrstrecke;
    - Auswählen (120) mindestens eines Fahrzeugs, genannt Zielfahrzeug, in Abhängigkeit von den verfügbaren Leistungen und mindestens eines zuvor bestimmten Schwellenwerts der gesamten momentanen elektrischen Leistung für die Flotte;
    - Übertragen (122) mindestens einer Fahranweisung an das mindestens eine Zielfahrzeug, wobei die momentane Leistung, die durch das Zielfahrzeug verbraucht wird, geändert wird.

2. Verfahren (100) nach dem vorstehenden Anspruch, **dadurch gekennzeichnet, dass** es ferner für jedes Fahrzeug ($402_1$-$402_n$) ein Bestimmen (106) eines Parameters, genannt Komplexitätsparameter, in Bezug auf eine Modulation der momentanen Leistung, die in dem Fahrzeug ($402_1$-$402_n$) verbraucht wird, umfasst, wobei das Auswählen mindestens eines Zielfahrzeugs ferner in Abhängigkeit von dem Komplexitätsparameter durchgeführt wird.

3. Verfahren (100) nach einem der vorstehenden Ansprüche, **dadurch gekennzeichnet, dass** es vor der Leistungsmodulationsphase (110) ein Bestimmen (104) umfasst, für mindestens ein Fahrzeug ($402_1$-$402_n$), das eine Fahrstrecke zurücklegt, von:

  - einem ersten Leistungsprofil, das es ermöglicht, die Fahrstrecke schneller zurückzulegen;
  - einem zweiten Leistungsprofil, das es ermöglicht, die Fahrstrecke mit einer Verzögerung, genannt maximale Verzögerung, in Bezug auf das erste Leistungsprofil zurückzulegen;

  der Schritt des Bestimmens (116) einer verfügbaren Leistung für das Fahrzeug ($402_1$-$402_n$) umfassend die folgenden Abläufe:

  - Bestimmen einer aktuellen Fahrzeitabweichung, genannt aktuelle Verzögerung, gemäß dem zweiten Leistungsprofil relativ zu der Fahrzeit gemäß dem ersten Leistungsprofil, genannt aktuelle Verzögerung, in Abhängigkeit von der aktuellen Position des Fahrzeugs ($402_1$-$402_n$) auf der Fahrstrecke; und
  - Berechnen der verfügbaren Leistung in Abhängigkeit von der aktuellen Verzögerung, der maximalen Verzögerung und dem ersten und dem zweiten Leistungsprofil.

4. Verfahren (100) nach dem vorstehenden Anspruch, **dadurch gekennzeichnet, dass** mindestens ein Leistungsprofil eines Fahrzeugs ($402_1$-$402_n$) für eine Fahrstrecke bestimmt wird:

  - durch Messen, bei einem vorbereitenden Schritt, indem das Fahrzeug auf der Fahrstrecke verkehrt;
  - durch Berechnen in Abhängigkeit von mindestens einem Merkmal des Fahrzeugs und mindestens einem Merkmal der Fahrstrecke.

5. Verfahren (100) nach einem der vorstehenden Ansprüche,
  **dadurch gekennzeichnet, dass** der Schritt (112) des Bestimmens einer momentanen Leistung umfasst:

  - eine Wiedergabe eines Werts der verbrauchten Leistung zu einem gegebenen Moment, der durch ein Organ an Bord des Fahrzeugs bereitgestellt wird; oder
  - Berechnen der Leistung in Abhängigkeit von einer Spannung und einem Strom, die durch das Fahrzeug in dem Moment verbraucht werden.

6. Verfahren (100) nach einem der vorstehenden Ansprüche,
  **dadurch gekennzeichnet, dass** mindestens eine Fahranweisung eine Anweisung zum Verringern der Drehzahl des Zielfahrzeugs durch Bremsen, durch Verringern einer Beschleunigung, durch Stoppen der Beschleunigung ist.

7. Verfahren (100) nach einem der vorstehenden Ansprüche, **dadurch gekennzeichnet, dass** für mindestens ein Zielfahrzeug die Fahranweisung auf automatische Weise angewendet wird.

**8.** Verfahren (100) nach einem der Ansprüche 1 bis 6, **dadurch gekennzeichnet, dass** für mindestens ein Zielfahrzeug die Fahranweisung einem Fahrer des Zielfahrzeugs signalisiert wird und durch den Fahrer ausgelöst wird.

**9.** System (400) zum Regulieren der gesamten momentanen elektrischen Leistung, die durch eine Schienenfahrzeugflotte ($402_1$-$402_n$) verbraucht wird, das System (400) umfassend:

- ein Gehäuse (300, $300_1$-300n), das innerhalb jedes Fahrzeugs ($402_1$-$402_n$) installiert und konfiguriert ist zum:

- Bestimmen der momentanen Leistung, die durch das Fahrzeug ($402_1$-$402_n$) verbraucht wird;
- Bestimmen einer Leistung, verfügbar genannt, in Abhängigkeit von der momentanen Leistung und der Position des Fahrzeugs ($402_1$-$402_n$) auf seiner Strecke;

- einen Server (408), der konfiguriert ist zum:

- Auswählen mindestens eines Fahrzeugs, genannt Zielfahrzeug, in Abhängigkeit von den verfügbaren Leistungen;
- Übertragen mindestens einer Fahranweisung an das mindestens eine Zielfahrzeug, wobei die momentane Leistung des Zielfahrzeugs geändert wird.

**10.** System (400) nach dem vorstehenden Anspruch, **dadurch gekennzeichnet, dass** das Gehäuse (300, $300_1$-$300_n$) mindestens eines Fahrzeugs ($402_1$-$402_n$) eine beliebige Kombination aus mindestens einem der folgenden Mittel umfasst:

- einer drahtlosen Kommunikationsschnittstelle (302) mit dem zentralen Server (408);
- einer drahtgebundenen oder drahtlosen Kommunikationsschnittstelle (304) mit mindestens einem Organ des Fahrzeugs ($402_1$-$402_n$);
- einem Geolokalisierungsmodul (306) des Fahrzeugs,
- einem Beschleunigungsmesser.

**Claims**

**1.** Method (100) for controlling the total instant electrical power consumed by a fleet of railway vehicles ($402_1$-$402_n$), **characterized in that** it comprises at least one iteration of a power modulation phase (110), comprising the following steps:

- for each vehicle ($402_1$-$402_n$) of said fleet:

- determining (112), within said vehicle ($402_1$-$402_n$), an instant electrical power consumed by said vehicle ($402_1$-$402_n$),
- determining (116) an available electrical power on the basis of said instant power and the position of said vehicle ($402_1$-$402_n$) on its route;
- selecting (120) at least one target vehicle on the basis of said available power and at least one total instant electrical power threshold value which is predetermined for said fleet; and
- transmitting (122) at least one driving instruction to said at least one target vehicle, modifying the instant power consumed by said target vehicle.

**2.** Method (100) according to the preceding claim, **characterized in that** it further comprises, for each vehicle ($402_1$-$402_n$), determining (106) a complexity parameter relating to a modulation of the instant power consumed in said vehicle ($402_1$-$402_n$), the selection of at least one target vehicle being further carried out on the basis of said complexity parameter.

**3.** Method (100) according to either of the preceding claims, **characterized in that** it comprises, prior to the power modulation phase (110), determining (104), for at least one vehicle ($402_1$-$402_n$) traveling on a route:

- a first power profile which makes it possible to travel said route most quickly; and
- a second power profile which makes it possible to travel said route with a delay, which is referred to as the maximum delay, with respect to the first power profile;

the step of determining (116) a power available for said vehicle ($402_1$-$402_n$) comprising the following operations:

- determining a current travel time deviation, which is referred to as the current delay, according to the second power profile with respect to the travel time according to the first power profile, which is referred to as the current delay, on the basis of the current position of said vehicle ($402_1$-$402_n$) on said route; and
- calculating the available power on the basis of said current delay, said maximum delay and the first and second power profiles.

**4.** Method (100) according to the preceding claim, **characterized in that** at least one power profile of a vehicle ($402_1$-$402_n$) for a route is determined:

- by means of measurement, during a preliminary step, by circulating said vehicle on said route; and
- by means of calculation on the basis of at least one characteristic of said vehicle and at least one characteristic of said route.

5. Method (100) according to any of the preceding claims,
**characterized in that** the step (112) of determining an instant power comprises:

- reading a consumed power value at a particular time, which value is provided by an element embedded in said vehicle; or
- calculating said power on the basis of a voltage and a current which are consumed by said vehicle at said time.

6. Method (100) according to any of the preceding claims,
**characterized in that** at least one driving instruction is an instruction to decrease the speed of the target vehicle by braking, by decreasing acceleration, by stopping acceleration.

7. Method (100) according to any of the preceding claims,
**characterized in that,** for at least one target vehicle, the driving instruction is applied automatically.

8. Method (100) according to any of claims 1 to 6, **characterized in that,** for at least one target vehicle, the driving instruction is signaled to a driver of said target vehicle and triggered by said driver.

9. System (400) for controlling the total instant electrical power consumed by a fleet of railway vehicles ($402_1$-$402_n$), said system (400) comprising:

- a housing (300, $300_1$-$300_n$) which is installed within each vehicle ($402_1$-$402_n$) and configured to:
- determine an instant power consumed by said vehicle ($402_1$-$402_n$); and
- determine an available power on the basis of said instant power and the position of said vehicle ($402_1$-$402_n$) on its route; and
- a server (408) which is configured to:

- select at least one target vehicle on the basis of said available power; and
- transmit at least one driving instruction to said at least one target vehicle modifying the instant power of said target vehicle.

10. System (400) according to the preceding claim, **characterized in that** the housing (300, $300_1$-$300_n$) of at least one vehicle ($402_1$-$402_n$) comprises any combination of at least one of the following means:

- an interface (302) for wirelessly communicating with the central server (408);
- a wired, or wireless, communication interface (304) having at least one element of said vehicle ($402_1$-$402_n$);
- a module (306) for geolocating said vehicle; and
- an accelerometer.

100

Etablissement profils de puissance pour chaque couple [véhicule, trajet]

Etablissement paramètre de complexité pour chaque couple [véhicule, trajet]

Pour chaque véhicule : détermination puissance instantanée

Pour chaque véhicule : détermination position véhicule

Pour chaque véhicule : détermination puissance disponible

Pour chaque véhicule : transmission valeurs de puissance vers site central

Sélection véhicule(s) cible(s)

Pour chaque véhicule cible : transmission consignes de roulage

Pour chaque véhicule cible : application consigne de roulage

## FIG. 1

## FIG. 3

304

302

306

312

310

308

300

**FIG. 2**

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2708438 A1
- EP 3150419 A1